# FASCICULE DE BREVET EUROPEEN

(11) **EP 2 327 127 B1**
(45) Date de publication et mention de la délivrance du brevet: **24.10.2012**
(21) Numéro de dépôt: 09780198.9
(22) Date de dépôt: 06.07.2009
(51) Int. Cl.: H01S 3/0941

(54) **STRUCTURE DE POMPAGE OPTIQUE**
OPTISCHE PUMPSTRUKTUR
OPTICAL PUMPING STRUCTURE

(30) Priorité: 17.09.2008 FR 0805111
(43) Date de publication de la demande: 01.06.2011
(73) Titulaire: THALES, 92200 Neuilly-sur-Seine (FR)
(72) Inventeur: LUREAU, François, F-75116 Paris (FR); ROUSSEAU, Pascal, F-78220 Viroflay (FR); RENAUD, Marc, F-78180 Montigny Le Bretonneux (FR); FERAL, Alain, F-94100 Saint Maur (FR); NICOLINI, Alain, F-91430 Igny (FR)
(74) Mandataire: Henriot, Marie-Pierre
(86) Numéro de dépôt international: PCT/EP2009/058523
(87) Numéro de publication internationale: WO 2010/031606

(56) Documents cités:
- EP-A- 1 463 165
- WO-A-2007/074400
- GB-A- 2 276 973
- US-A- 5 774 488
- US-B1- 7 082 149
- US-B1- 7 082 149

## Description

Le domaine de l'invention est celui du pompage optique pour un laser et plus spécifiquement du pompage par diodes.

La structure de pompage optique est un sous ensemble critique pour les performances du laser.

Elle nécessite une bonne extraction de la puissance thermique dissipée dans le milieu actif mais aussi une bonne homogénéité des températures des diodes de pompage utilisées, afin de garantir une répartition homogène du gain du laser au cours d'une séquence de tir et à différentes cadences entre deux impulsions consécutives lorsqu'il s'agit d'un laser impulsionnel. On rappelle que pour un laser impulsionnel, la puissance moyenne dissipée par la structure, P_{moy} est donnée par la relation :
P_{moy} = P_{diodes} x nb diodes x durée pompage x cadence des impulsions,
P_{diodes} étant la puissance de chaque ensemble de diodes de pompage.

La cadence et la durée du pompage liées à la durée de la séquence de tir, font donc varier la puissance dissipée ce qui a un impact sur les performances optiques.

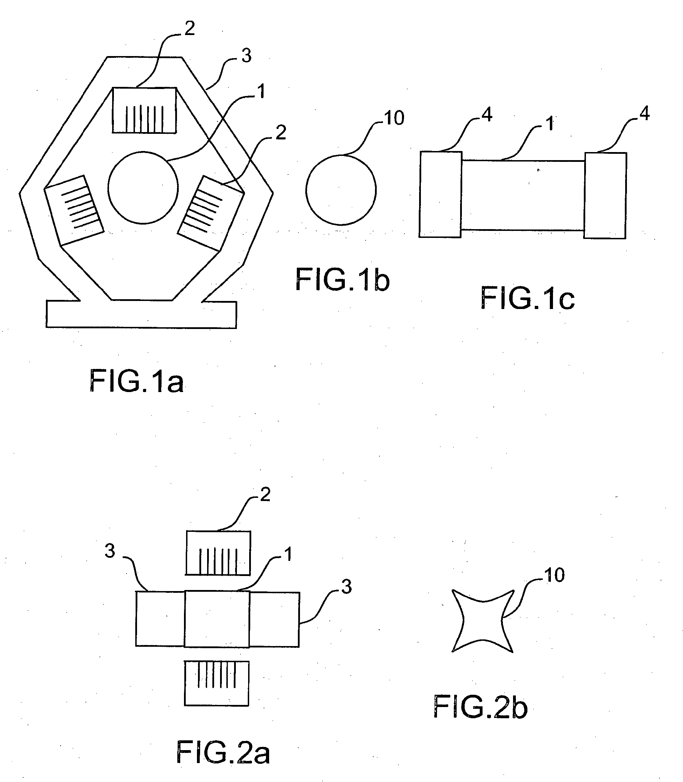

Il existe actuellement des structures de pompage à configuration rectangulaire dont une vue en coupe est montrée figure 2a. Une telle structure comporte un barreau longitudinal 1 à section carrée utilisé comme milieu actif ; il est pompé par deux ensembles de diodes 2 disposés le long du barreau et symétriquement vis-à-vis de deux faces parallèles, les deux autres faces du barreau étant en contact avec un élément d'extraction de la chaleur 3 par conduction. Si une telle configuration est efficace pour la dissipation thermique, elle ne l'est pas quant à la qualité du faisceau obtenu en sortie : la figure du faisceau en sortie 10 montrée en coupe figure 2b, imposée par la géométrie de la section n'est pas circulaire.

Une autre solution consiste à utiliser une structure de pompage à configuration circulaire, c'est-à-dire comportant un barreau 1 à section circulaire ; une vue en coupe est montrée figure 1a. La figure du faisceau en sortie 10, imposée par la géométrie de la section et montrée figure 1b, est alors circulaire ce qui garantit une bonne qualité du faisceau. Des ensembles de diodes de pompage 2, par exemple trois ensembles, sont disposés en étoile autour du barreau 1. Des éléments de dissipation thermique sous forme de bagues en aluminium 4 enserrent le barreau 1 à ses extrémités comme on le voit figure 1c ; la dissipation thermique est également assurée par un dispositif de refroidissement 3 utilisant une circulation de liquide qui relie les ensembles de diodes 2 comme on le voit en coupe figure 1 a. Un exemple d'une telle structure de pompage à refroidissement liquide et comportant 4 ensembles de diodes disposés en étoile, est présenté dans le brevet US 6101 208, qui indique également qu'un refroidissement par conduction ne donne pas satisfaction. Dans ce cas la bonne qualité du faisceau est obtenue au détriment d'un encombrement important et de l'utilisation d'un liquide caloporteur.

US 7082149 décrit un laser impulsionnel à haute energie, à l'état solide et à pompage latéral dont les diodes et le barreau sont refroidis par eau.

WO 2007/07 4400 présente une cavité laser à l'état solide pompée par un seul empilement de barettes de diodes. Elle inclut un dispositif de refroidissement thermoélectrique.

Un refroidissement efficace utilisant un gaz (air par exemple) au lieu d'un liquide dans un encombrement minimal est un enjeu majeur.

En conséquence, il demeure à ce jour un besoin pour une structure de pompage donnant simultanément satisfaction à l'ensemble des exigences précitées, à savoir un refroidissement par gaz, une bonne extraction de la puissance thermique dissipée dans le milieu actif (réduction des températures et des gradients thermiques internes axiaux et longitudinaux), une bonne homogénéité des températures des diodes de pompage utilisées, un encombrement minimal et une bonne qualité du faisceau optique.

Plus précisément, l'invention a pour objet une structure de pompage optique pour laser qui comprend un milieu actif sous la forme d'un barreau cylindrique à section circulaire, celui-ci étant enfiché à ses extrémités dans deux bagues en matériau thermiquement conducteur, au moins trois empilements de barrettes de diodes de pompage disposés en étoile autour du barreau, un support régulé en température par un module à effet Peltier. Elle est principalement caractérisée en ce que les bagues sont en contact avec le support, et en ce qu'un empilement de diodes dit empilement inférieur étant situé entre le barreau et le support, elle comprend pour chaque autre empilement un bloc de conduction thermique formant un support pour ledit empilement, ces blocs étant montés sur le support refroidi mais n'étant pas en contact entre eux ni avec les bagues.

Elle comprend en outre avantageusement une cale en matériau thermiquement conducteur, située sous l'empilement inférieur pour adapter la résistance thermique entre cet empilement et son support.

Selon une caractéristique de l'invention, la cale comporte au moins un trou, éventuellement rempli d'un matériau thermiquement conducteur autre que celui de la cale.

Selon une autre caractéristique de l'invention, une bague est fixée au support par une bride souple permettant d'absorber les dilatations thermiques différentielles entre le barreau et son support à savoir les bagues.

D'autres caractéristiques et avantages de l'invention apparaîtront à la lecture de la description détaillée qui suit, faite à titre d'exemple non limitatif et en référence aux dessins annexés dans lesquels :
- les figures 1 déjà décrites représentent schématiquement des vues en coupe d'une structure de pompage optique à barreau cylindrique à section circulaire selon l'état de la technique, de face (fig 1a), de côté (fig 1 c) et la forme du faisceau en résultant (fig 1 b),
- les figures 2 déjà décrites représentent schématiquement des vues en coupe d'une structure de pompage optique à barreau cylindrique à section carrée selon l'état de la technique, de face (fig 2a), et la forme du faisceau en résultant (fig 2b),
- les figures 3 représentent les étapes successives de montage d'une structure de pompage optique à barreau cylindrique à section circulaire selon l'invention.

D'une figure à l'autre, les mêmes éléments sont repérés par les mêmes références.

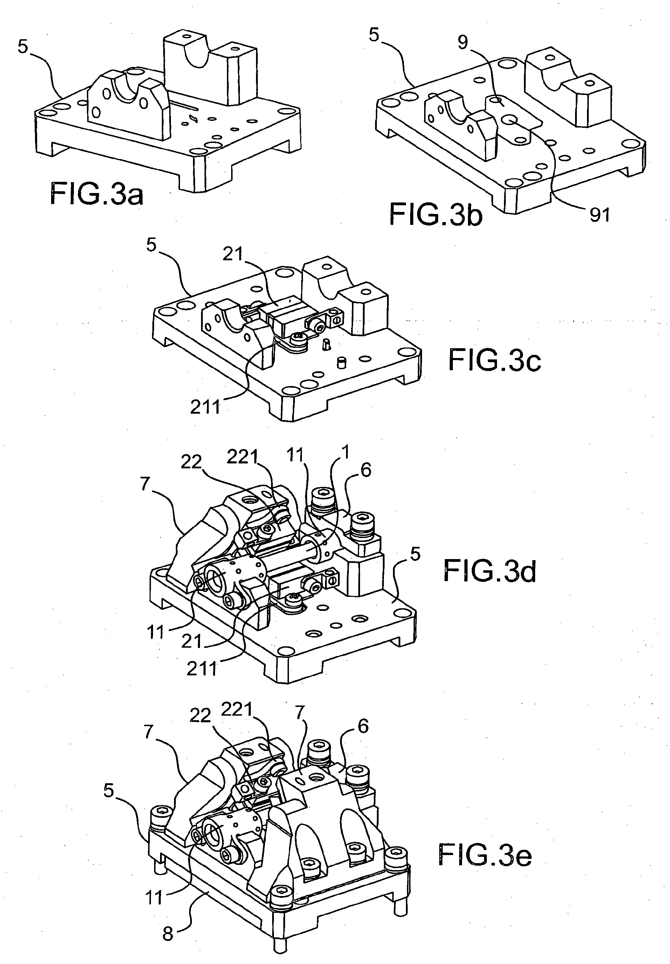

On décrit en relation avec les figures 3, les différents éléments d'un exemple de structure de pompage optique selon l'invention, au fur et à mesure du montage de cette structure.

Elle comprend un support 5 qui a une fonction de répartiteur thermique et sur lequel est mis en place un empilement de diodes de pompage dit empilement inférieur 21 monté sur une semelle 211. Ce support 5 est dans un matériau thermiquement conducteur tel que le cuivre ou un alliage d'aluminium.

Le milieu actif est sous la forme d'un barreau cylindrique à section circulaire 1 ; il est enfiché à ses extrémités dans deux bagues 11 en cuivre ou en alliage d'aluminium qui permettent d'extraire aux extrémités, par conduction et de façon symétrique, la puissance thermique dissipée dans le barreau. Ce barreau muni de ses deux bagues est installé sur le support 5, les bagues 11 étant en contact avec ledit support 5 ; il est fixé au support 5 par exemple au moyen d'une bride 6 suffisamment souple de manière à maintenir le barreau, tout en permettant d'absorber les dilatations thermiques différentielles entre le barreau 1 et son support à savoir les bagues 11. Le barreau est monté au-dessus de l'empilement de diodes 21 de manière à ce que cet empilement 21 soit disposé le long de la partie centrale du barreau, laissée libre par les bagues, légèrement distant de celui-ci.

Un deuxième empilement de diodes de pompage, dit empilement latéral 22, également monté sur une semelle 221, est fixé sur un bloc 7 de conduction thermique formant un support pour cet empilement 22 ; ce bloc support 7 est monté sur le support 5 de manière à ce que l'empilement soit disposé le long de la partie centrale du barreau 1, laissée libre par les bagues comme précédemment. Le bloc support 7 est en cuivre ou en alliage d'aluminium et est partiellement en contact avec le support 5.

Comme pour le deuxième empilement, un troisième empilement de diodes de pompage, aussi désigné empilement latéral 22, fixé sur un bloc 7 de conduction thermique formant un support, est monté sur le support 5. Ce bloc 7 est également en cuivre ou en alliage d'aluminium. Les trois empilements de diodes 21, 22 sont disposés symétriquement autour du barreau 1, en étoile soit à environ 120° les uns des autres. Comme on le voit sur les figures 3d et 3e, ces empilements ont le même emplacement selon l'axe longitudinal du barreau et il n'y a pas de bloc 7 de conduction thermique pour l'empilement de diodes inférieur 21.

Les blocs support 7 ne sont pas directement en contact les uns avec les autres ni avec les bagues 11 du barreau. De cette façon, la gestion des températures des diodes interfère de façon minimale avec celle du barreau. Cette conception thermique et mécanique permet d'assurer une homogénéité en température optimale des trois empilements de diodes.

Un module à effet Peltier 8 est rapporté sous le support 5 pour réguler en température les empilements de diodes et évacuer la puissance dissipée, l'ensemble étant monté sur un échangeur de chaleur métallique à circulation de gaz (air par exemple) au lieu d'un liquide comme fluide caloporteur, cet échangeur étant en contact avec la face chaude du module à effet Peltier. Une interface entre le module 8 et cet échangeur peut aussi être ajoutée.

La résistance thermique entre un empilement de diodes 21 ou 22 et son support 5 ou 7 est adaptée de façon à rendre les trois empilements de diodes homogènes en température, ce qui permet de minimiser les variations de longueur d'onde au cours d'une séquence de tir ou à différentes cadences, et assure ainsi une répartition homogène du gain déposé dans le barreau.

A cet effet, la structure comprend avantageusement une cale 9 en matériau thermiquement conducteur tel que le cuivre ou un alliage d'aluminium, située sous l'empilement inférieur 21 pour adapter la résistance thermique entre cet empilement et son support 5. Un trou 91 ou même plusieurs trous, peut également être formé dans cette cale 9 et éventuellement être rempli d'un matériau thermiquement conducteur autre que celui de la cale, comme par exemple de l'indium ou un silicone chargé d'alumine, pour adapter la résistance thermique entre l'empilement et son support.

La structure de pompage selon l'invention permet d'obtenir un faible écart de température entre les empilements de diodes et d'extraire de façon symétrique la puissance dissipée dans le barreau.

L'utilisation d'un gaz (air par exemple) au lieu d'un liquide comme fluide caloporteur permet en outre de réduire la masse du dispositif, d'accroître sa fiabilité (en particulier liée aux risques de fuite du liquide pour les dispositifs de l'état de la technique) et de réduire les contraintes de logistique et de maintenance.

Son volume global est faible au regard de la géométrie optique. Enfin, la procédure de montage de cette structure est optimisée.

Une structure de pompage optique selon l'invention a été réalisée avec les caractéristiques suivantes :
- diamètre du barreau d'environ 4 mm,
- puissance thermique déposée dans le barreau Nd :Yag d'environ 2 Watt moyen,
- longueur d'onde émise égale à environ 1 µm,
- 3 empilements d'environ 10 barrettes de diodes, répartis à 120° et distants d'environ 1,5 mm du barreau,
- puissance d'un empilement d'environ 3 Watt,
- longueur d'onde des diodes d'environ 808 nm,
- différence de température entre l'embase de l'empilement inférieur et l'échangeur métallique à circulation de gaz < 3°C,
- différence de température entre le haut de l'embase d'un empilement latéral et le bas de l'embase < 3°C,
- différence de température entre l'empilement inférieur et un empilement latéral < 1°C,
- encombrement d'environ 0.07l
- performances constantes pour une cadence variant entre 1 et 20 Hz.

Des exemples de matériaux utilisés sont présentés dans le tableau ci-dessous à titre indicatif.

| **Pièce** | **Matériaux** |
|---|---|
| Semelles Diodes 211, 221 | Cuivre |
| Supports empilements latéraux (bloc 7) | Cuivre ou alliage d'aluminium |
| Cales de réglage 9 | Cuivre ou alliage d'aluminium |
| Barreau 1 | YAG |
| Bagues 11 | Cuivre ou alliage d'aluminium |
| Interface avec module Peltier | Indium ou Silicone chargé d'alumine |
| Support 5 | Cuivre ou alliage d'aluminium |

## Revendications

1. Structure de pompage optique pour laser qui comprend :
- un milieu actif sous la forme d'un barreau (1) cylindrique à section circulaire, celui-ci étant enfiché à ses extrémités dans deux bagues (11)
- au moins trois empilements (21, 22) de barrettes de diodes de pompage disposés en étoile autour du barreau, **caractérisée en ce que** les bagues (11) sont en matériau thermiquement conducteur, et en contact avec un support (5), et **en ce qu'**un empilement de diodes dit empilement inférieur (21) étant situé entre le barreau (1) et le support (5), elle comprend pour chaque autre empilement (22) un bloc (7) de conduction thermique formant un support pour ledit empilement (22), ces blocs (7) étant montés sur le support refroidi (5) et n'étant pas en contact entre eux ni avec les bagues (11) et le
- support (5) est régulé en température par un module à effet

2. Structure de pompage optique pour laser selon la revendication précédente, **caractérisée en ce qu'**elle comprend un échangeur de chaleur utilisant un gaz comme fluide caloporteur et reporté sur la face du module à effet Peltier (8) près du support (5).

3. Structure de pompage optique pour laser selon l'une des revendications précédentes, **caractérisée en ce qu'**elle comprend en outre une cale (9) en matériau thermiquement conducteur située sous l'empilement inférieur (21) pour adapter la résistance thermique entre cet empilement et son support (5).

4. Structure de pompage optique pour laser selon la revendication précédente, **caractérisée en ce que** la cale (9) comporte au moins un trou (91).

5. Structure de pompage optique pour laser selon la revendication précédente, **caractérisée en ce que** le trou (91) est rempli d'un matériau thermiquement conducteur autre que celui de la cale.

6. Structure de pompage optique pour laser selon l'une des revendications précédentes, **caractérisée en ce qu'**elle comprend une bride (6) souple de maintien d'une bague (11).

## Claims

1. An optical pumping structure for a laser, comprising:
- an active medium in the form of a cylindrical bar (1) with a circular cross-section, the ends of said bar being inserted into two rings (11);
- at least three stacks (21, 22) of strips of pumping diodes arranged in a star shape around said bar,
**characterised in that** the rings (11) are made from a thermally conductive material and are in contact with a support (5), and **in that** a stack of diodes, referred to as the lower stack (21), is located between the bar (1) and the support (5), for each other stack (22) it comprises a thermal conduction block (7) forming a support for said stack (22), said blocks (7) being mounted on the cooled support (5) and not being in contact with each other or the rings (11), and
the support (5) is temperature regulated by a Peltier effect module (8).

2. The optical pumping structure for a laser according to the preceding claim, **characterised in that** it comprises a heat exchanger that uses a gas as a heat transfer fluid and is taken to the surface of the Peltier effect module (8) near the support (5).

3. The optical pumping structure for a laser according to any one of the preceding claims, **characterised in that** it further comprises a shim (9) made from a thermally conductive material located beneath the lower stack (21) for adapting the thermal resistance between this stack and its support (5).

4. The optical pumping structure for a laser according to the preceding claim, **characterised in that** the shim (9) includes at least one hole (91).

5. The optical pumping structure for a laser according to the preceding claim, **characterised in that** the hole (91) is filled with a thermally conductive material other than that of the shim.

6. The optical pumping structure for a laser according to any one of the preceding claims, **characterised in that** it comprises a flexible flange (6) for retaining a ring (11).

## Patentansprüche

1. Optische Pumpstruktur für einen Laser, die Folgendes umfasst:
- ein aktives Medium in Form eines zylindrischen Stabs (1) mit einem kreisförmigen Querschnitt, wobei die Enden des Stabs in zwei Ringen (11) stecken;
- wenigstens drei Stapel (21, 22) von Pumpdiodenleisten, die sternförmig um den Stab herum angeordnet sind,
**dadurch gekennzeichnet, dass** die Ringe (11) aus einem wärmeleitenden Material gebildet und mit einer Auflage (5) in Kontakt sind, und dadurch, dass sich ein Stapel Dioden, nachfolgend unterer Stapel (21) genannt, zwischen dem Stab (1) und der Auflage (5) befindet, sie für jeden anderen Stapel (22) einen Wärmeleitungsblock (7) umfasst, der eine Auflage für den Stapel (22) bildet, wobei diese Blöcke (7) auf der gekühlten Auflage (5) montiert und nicht miteinander oder mit den Ringen (11) in Kontakt sind
und die Temperatur der Auflage (5) durch ein Peltier-Effekt-Modul (8) geregelt wird.

2. Optische Pumpstruktur für einen Laser nach dem vorherigen Anspruch, **dadurch gekennzeichnet, dass** sie einen Wärmetauscher umfasst, der ein Gas als Wärmeübertragungsfluid benutzt und auf die Oberfläche des Peltier-Effekt-Moduls (8) in der Nähe der Auflage (5) zurückgeführt wird.

3. Optische Pumpstruktur für einen Laser nach einem der vorherigen Ansprüche, **dadurch gekennzeichnet, dass** sie ferner eine Zwischenscheibe (9) aus einem wärmeleitenden Material umfasst, die sich unter dem unteren Stapel (21) befindet, um die Wärmebeständigkeit zwischen diesem Stapel und seiner Unterlage (5) anzupassen.

4. Optische Pumpstruktur für einen Laser nach dem vorherigen Anspruch, **dadurch gekennzeichnet, dass** die Zwischenscheibe (9) wenigstens ein Loch (91) aufweist.

5. Optische Pumpstruktur für einen Laser nach dem vorherigen Anspruch, **dadurch gekennzeichnet, dass** das Loch (91) mit einem anderen wärmeleitenden Material als dem der Zwischenscheibe gefüllt ist.

6. Optische Pumpstruktur für einen Laser nach einem der vorherigen Ansprüche, **dadurch gekennzeichnet, dass** sie einen flexiblen Flansch (6) zum Festhalten eines Rings (11) umfasst.
